# EUROPÄISCHE PATENTSCHRIFT

(11) **EP 1 690 047 B1**
(45) Veröffentlichungstag und Bekanntmachung des Hinweises auf die Patenterteilung: **14.03.2007**
(21) Anmeldenummer: 04797618.8
(22) Anmeldetag: 04.11.2004
(51) Int. Cl.: F24J 2/05, F24J 2/10

(54) **SOLARKOLLEKTOR**
SOLAR COLLECTOR
CAPTEUR SOLAIRE

(30) Priorität: 04.11.2003 DE 10351474
(43) Veröffentlichungstag der Anmeldung: 16.08.2006
(60) Teilanmeldung: 06016603.0
(73) Patentinhaber: Schott AG, 55122 Mainz (DE)
(72) Erfinder: KUCKELKORN, Thomas, 92637 Weiden i.d.Opf. (DE); HILDEBRANDT, Christina, 79539 Lörrach (DE); EICKHOFF, Martin, E-04250 Pechina (ES)
(74) Vertreter: Fuchs Mehler Weiss & Fritzsche
(86) Internationale Anmeldenummer: PCT/EP2004/012493
(87) Internationale Veröffentlichungsnummer: WO 2005/045329

(56) Entgegenhaltungen:
- WO-A-03/042609
- US-A- 4 295 462
- US-A- 4 703 749

## Beschreibung

Die Erfindung betrifft einen Solarkollektor mit einem Absorberrohr, mit einem Solarstrahlung auf das Absorberrohr fokussierenden Konzentrator und mit mindestens zwei das Absorberrohr umgebenden strahlungsdurchlässigen Hüllrohren an, wobei in Verbindungsbereichen zwischen den Hüllrohren Ausgleichsstücke für den Längenausgleich vorgesehen sind.

Unter Konzentratoren werden Einrichtungen verstanden, die die Solarstrahlung auf das Absorberrohr fokussieren. Es kann sich hierbei z.B. um optische Einrichtungen handeln. Bevorzugt sind Parabolspiegel, die als Rinne ausgeführt sind. Die an solchen Parabolrinnen reflektierte Strahlung wird in einer Brennlinie konzentriert, in der das Absorberrohr und das Hüllrohr angeordnet sind. Solche Parabolrinnen können auch aus mehreren Rinnensegmenten mit eigenen Krümmungsradien und mit eigenen Brennlinien bestehen.

Kommerzielle solare Hochtemperatur-Parabolrinnenkollektoren weisen starke optische Verluste an den Verbindungsbereichen der aus Glas bestehenden Hüllrohre auf. In den Verbindungsbereichen, in denen die Stützen an den Absorberrohren angreifen, sind die Hüllrohre unterbrochen, so dass diese Längenbereiche für die Energieabsorption nicht zur Verfügung stehen. Ein axial der Sonne nachgeführte Parabolrinnenkollektoren konzentrieren die eingestrahlte Solarenergie auf eine Brennlinie. In dieser verläuft ein Absorberrohrstrang, welcher von einem Wärmeübertragungsmedium, in der Regel Thermoöl oder Wasser, durchflossen wird. Ein Großteil der konzentrierten Solarstrahlung wird durch den Absorberrohrstrang in Wärmeenergie umgewandelt und an das Wärmeübertragungsmedium abgegeben. Um thermische Konvektionsverluste im Hochtemperaturbereich zu vermeiden, ist das heiße selektiv beschichtete Absorberrohr durch ein aus Glas bestehendes Hüllrohr umgeben, und der Zwischenraum zwischen Hüllrohr und Absorberrohr ist evakuiert. Aus Statik- und Festigkeitsgründen besteht der Absorberrohrstrang aus einer Vielzahl von Rohrstücken, die hintereinander angeordnet und miteinander verschweißt werden. An den Verbindungsbereichen greifen Metallstützen an, um das Absorberrohr in der Brennlinie des Parabolrinnenkollektors zu halten. Im bestrahlten Zustand dehnt sich das heiße Absorberrohr stärker als das kühlere Hüllrohr aus. Aus diesem Grund sind bei kommerziellen Absorberrohren, welche beispielsweise aus der WO 03/042609 A bekannt sind, Ausgleichsstücke zwischen den Hüllrohren vorgesehen. Diese Ausgleichsstücke bestehen in der Regel aus Metallbälgen, welche die Distanz zwischen den Hüllrohren überbrücken und unterschiedliche Längenausdehnungen kompensieren. Die Ausgleichsstücke werden durch Strahlungsschutzelemente, wie. z. B. durch Aluminiumbleche, von der konzentrierten Solarstrahlung abgeschattet, um vor allem die Glas-Metall-Schweißverbindungen vor zu hohen Temperaturgradienten zu schützen.

Kommerzielle solare Hochtemperatur-Parabolrinnenkollektoren weisen an den Absorberrohr-Verbindungsbereichen starke optische Verluste auf. Wegen der Notwendigkeit von flexiblen Glas-Metallübergängen und des Platzbedarfs der Stützen können die Verbindungsbereiche nicht als aktive Absorberrohroberfläche ausgeführt werden, und die ankommende konzentrierte Solarstrahlung kann nicht vom System aufgenommen werden. Durch diesen inaktiven Bereich gehen etwa 5 bis 6% der von den Parabolspiegeln reflektierten Strahlung verloren. Eine Nutzung der im inaktiven Bereich eingestrahlten Strahlung erscheint wegen des sich ständig verändernden Einfallswinkels sehr kompliziert.

Der Erfindung liegt die Aufgabe zugrunde, einen Solarkollektor mit verbesserter Ausnutzung der einfallenden Strahlungsenergie zu schaffen.

Der erfindungsgemäße Sonnenkollektor weist die Merkmale des Patentanspruchs 1 auf. Hiernach ist in den Verbindungsbereichen mindestens ein das Hüllrohr umgebender Spiegelkragen angeordnet, der mindestens eine plane Fläche aufweist.

Der Spiegelkragen bildet einen Sekundärreflektor, der die konzentrierte Solarstrahlung vom Verbindungsbereich in den Bereich aktiver Absorberrohrfläche reflektiert. Der ganz oder teilweise umlaufende Spiegelkragen hat die Fähigkeit, die aus verschiedenen Richtungen von den Parabolspiegeln kommende konzentrierte Solarstrahlung auch bei verschiedenen Sonneneinfallswinkeln auf die aktive Absorberrohrfläche zu reflektieren. Durch den Spiegelkragen kann zwar ein Teil der Absorberrohrlänge überdeckt werden, jedoch wird die auf diesen Teil treffende Solarstrahlung durch Sekundärreflektion in den absorbierenden Längenbereich des Absorberrohres geleitet.

Plane Flächen haben gegenüber einer Konusfläche den weiteren Vorteil, dass die Strahlung nicht divergent reflektiert wird, sondern dass die Reflektion einer optischen Achsenschrift entspricht. Hierbei bleibt der Focus innerhalb der Brennlinie erhalten, wodurch eine weitere Leistungssteigerung erreicht werden kann.

Die plane Fläche ist vorzugsweise senkrecht zur Achse des Hüllrohrs ausgerichtet.

Vorzugsweise ist die plane Fläche eine Ringfläche. Die Ringfläche kann sich über den gesamten Umfang des Hüllrohres oder als Teilringfläche nur über einen Abschnitt erstrecken.

Eine bevorzugte Ausführungsform sieht mehrere plane Flächen vor, die auf einem Konus angeordnet sind. Man erhält auf diese Weise plane Facettenflächen, deren Einhüllende einen Kegel bilden. Diese Anordnung ist insbesondere dann von Vorteil, wenn der Konzentrator eine Parabolrinne ist, die aus mehreren Parabolsegmenten besteht, die jeweils eigene Krümmungsradien aufweisen. Vorzugsweise ist jeweils mindestens eine plane Fläche jeweils einem Parabolsegment zugeordnet. Dies bedeutet, dass die plane Fläche derart auf der Konusfäche angeordnet ist, das die zum Parabolsegment gehörende Brennlinie auf der betreffende planen Fläche auftrifft.

Vorzugsweise sind jeweils zwei plane Flächen einem Parabolsegment zugeordnet. Hierbei ist die eine Fläche des Flächenpaares auf dem der Parabolrinne abgewandten Hälfte des Konus und die zweite Fläche auf der der Parabolrinne zugewandten Hälfte des Konus angeordnet.

Da vorzugsweise zwei bis vier Parabolsegmente vorgesehen sind, weist der Spiegelkragen dementsprechend vorzugsweise vier bis acht plane Flächen auf.

Das Verhältnis h durch L liegt vorzugsweise zwischen 0,3 bis 1, wobei h die Höhe des Spiegelkragens senkrecht zur Achse des Hüllrohres und L die Länge des Verbindungsbereiches bezeichnet. Das Verhältnis ist vorzugsweise so zu wählen, dass die Verschattungslänge V ganzjährig kleiner ist als die Länge L des Verbindungsbereiches. Dies hängt wiederum vom Ort, wo der Sonnenkollektor installiert ist und somit vom Winkel der Sonneneinstrahlung, ab.

Der Spiegelkragen besteht vorzugsweise aus Aluminium.

Im Folgenden werden unter Bezugnahme auf die Zeichnungen Ausführungsbeispiele der Erfindung näher erläutert. Die Beschreibung spezieller Ausführungsbeispiele beschränkt nicht den Schutzbereich der Erfindung.

Es zeigen:
- Fig. 1: eine perspektivische Darstellung eines Parabolrinnenkollektors,
- Fig. 2: eine Darstellung der Einzelheit II aus Fig. 1 zur Verdeutlichung der Konstruktion des Verbindungsbereiches mit einem umlaufenden Spiegelkragen,
- Fig. 3: eine perspektivische Darstellung einer Absorberrohranordnung mit Hüllrohr und Spiegelkragen mit ebener Fläche,
- Fig. 4a: eine perspektivische Darstellung eines Parabolrinnenkollektor mit mehreren Parabolsegmenten,
- Fig. 4b: eine schematische Seitenansicht der in Fig. 9 und 10a gezeigten Anordnung,
- Fig. 5: einen Spiegelkragen mit mehreren planen Flächen,
- Fig. 6: die Seitenansicht der in Fig. 11 gezeigten Anordnung und
- Fig. 7: eine schematische Darstellung der in den Figuren 11 und 12 dargestellten Anordnung, und
- Fig. 8-16: Diagramme zur Veranschaulichung des solaren Gewinnes.

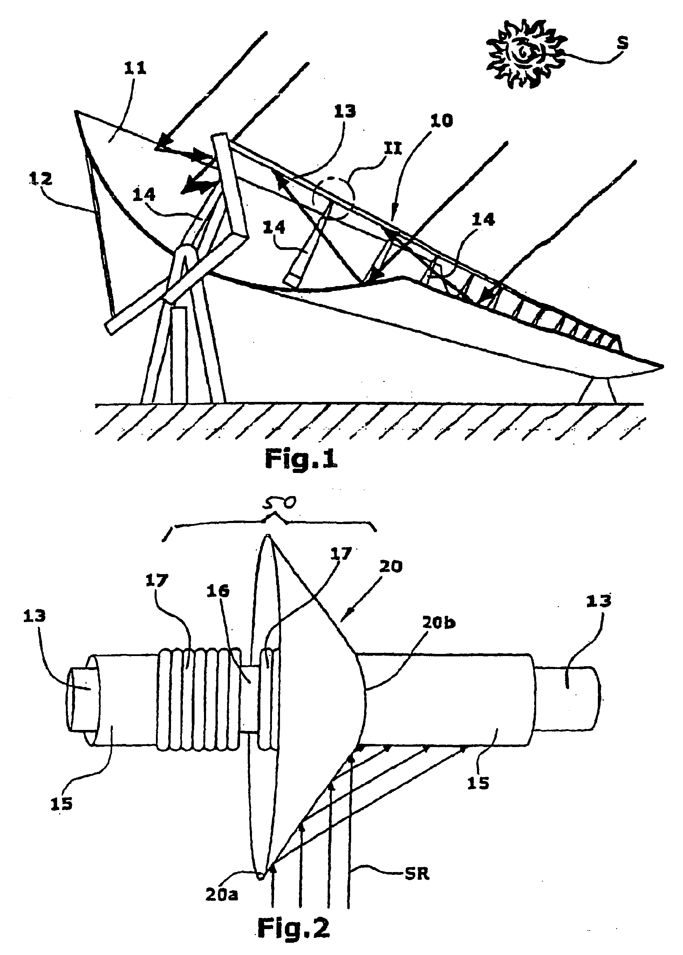

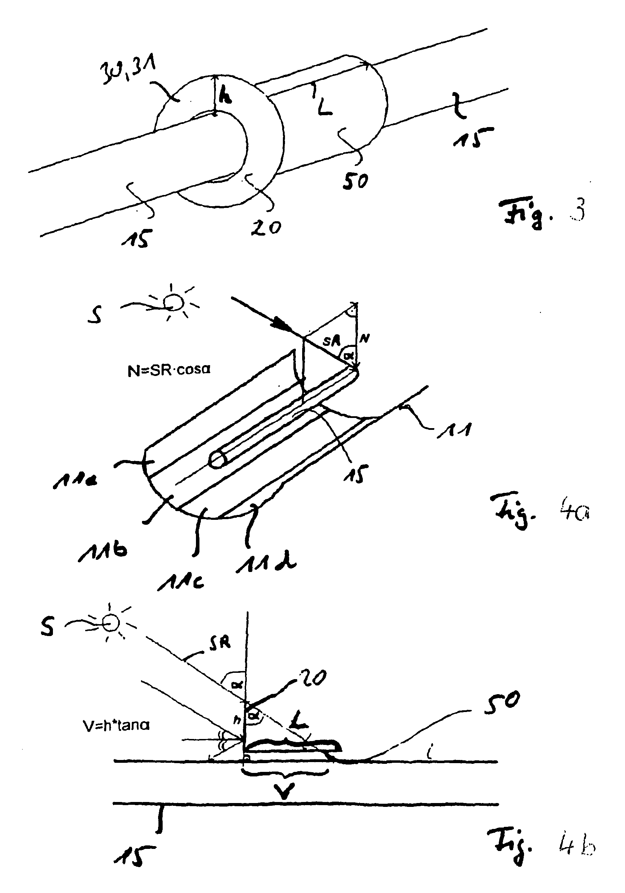

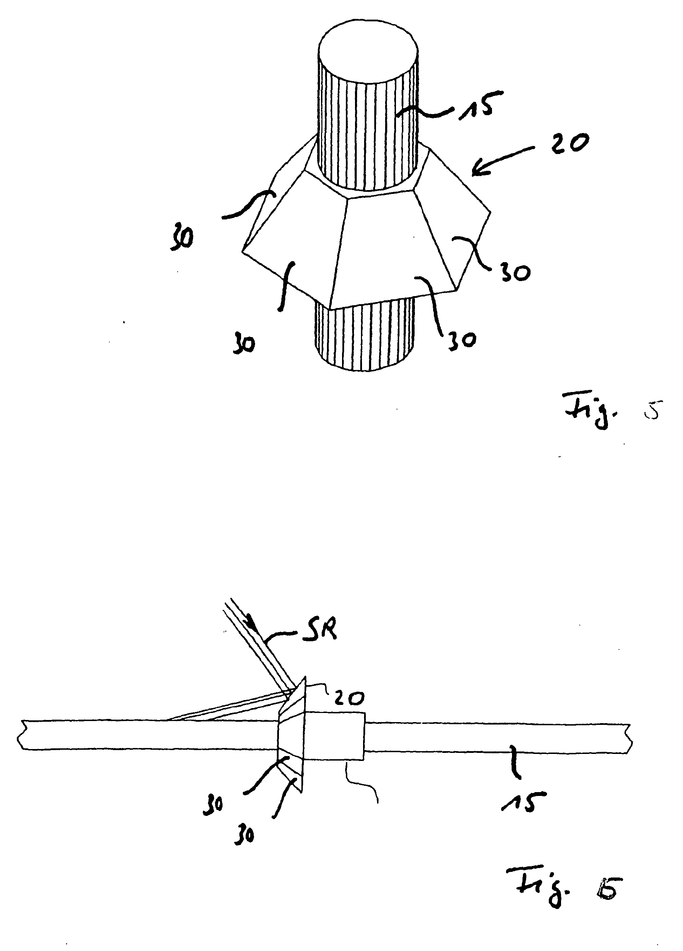

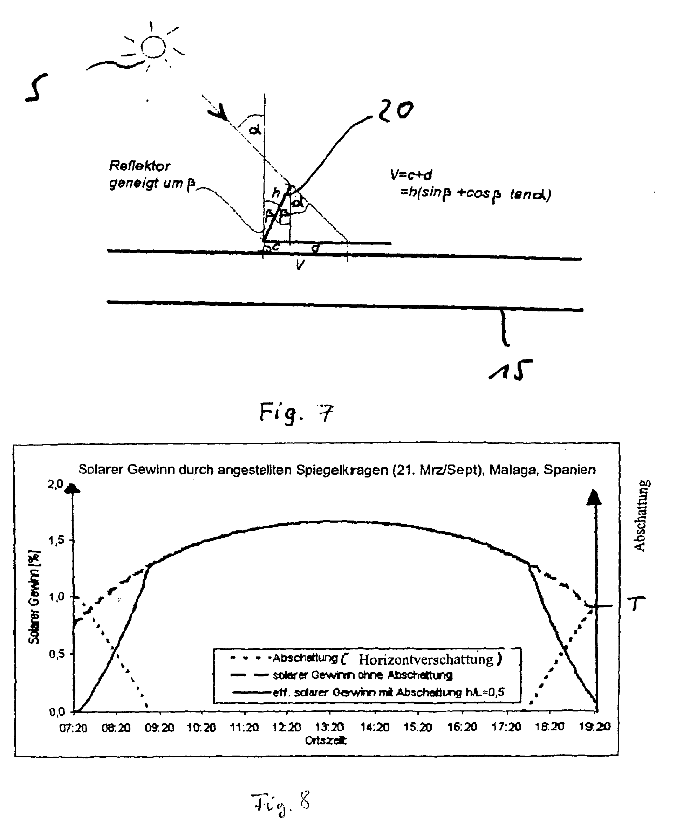

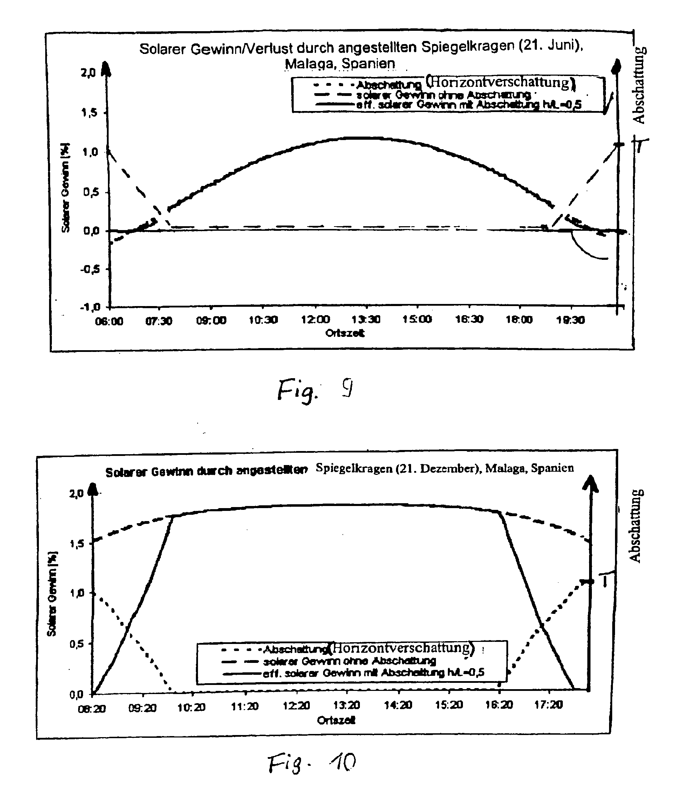

In Fig. 1 ist ein Parabolrinnenkollektor 10 dargestellt, der einen langgestreckten Parabolreflektor 11 von parabelförmigem Profil aufweist. Der Parabolreflektor 11 ist mit einer aus einem Fachwerk bestehenden Tragstruktur 12 versehen. Längs der Brennlinie des Parabolreflektors 11 erstreckt sich ein Absorberrohr 13, das an Stützen 14 befestigt ist, welche mit dem Parabolreflektor verbunden sind. Der Parabolreflektor bildet mit den Stützen 14 und dem Absorberrohr 13 eine Einheit, die um die Achse des Absorberohres geschwenkt und dadurch dem Stand der Sonne S einachsig nachgeführt wird. Die von der Sonne S einfallende parallele Solarstrahlung wird von dem Parabolreflektor 11 auf das Absorberrohr 13 fokussiert. Das Absorberrohr wird von einem Wärmeübertragungsmedium, z.B. Wasser oder Öl, durchflossen und durch die absorbierte Solarstrahlung erhitzt. Am Austrittsende des Absorberrohres kann das Wärmeübertragungsmedium entnommen und einem Wärmeaustauscher oder einem anderen Energieverbraucher zugeführt werden.

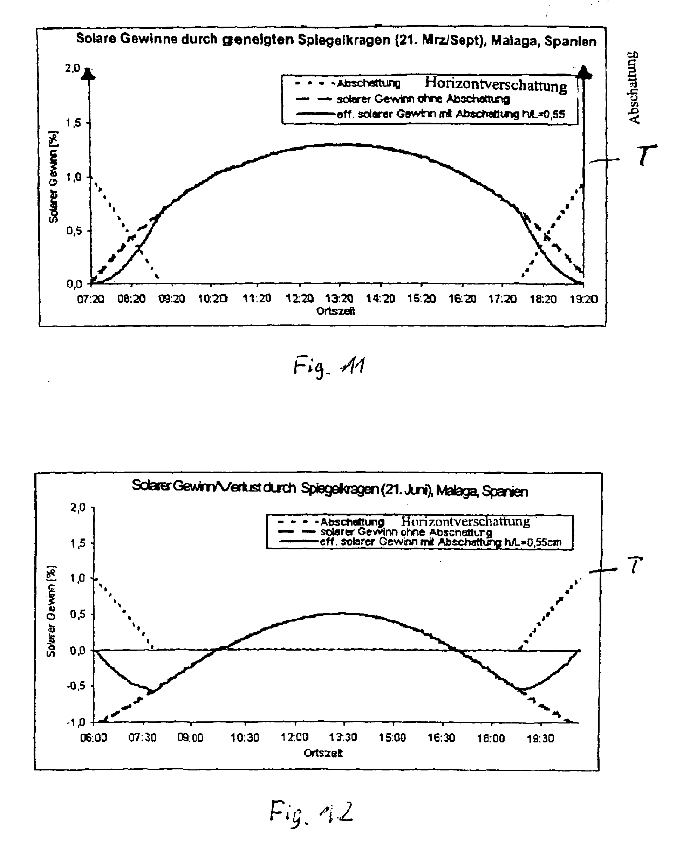

Fig. 2 zeigt das Absorberrohr 13, das aus mehreren Rohrabschnitten besteht und von Hüllrohren 15 aus Glas umgeben ist. Die Hüllrohre 15 dienen dazu, thermische Konvektionsverluste und Wärmestrahlungsverluste im Hochtemperaturbereich zu vermindern. Der Zwischenraum zwischen dem Absorberrohr 13 und dem Hüllrohr 15 ist evakuiert. Aus Statik- und Festigkeitsgründen besteht der Absorberrohrstrang aus einer Vielzahl von Absorberrohren, die miteinander verbunden sind. An den Verbindungsstellen 16 greifen jeweils die Stützen 14 an. Die Verbindungsstellen 16 sind daher nicht von dem Hüllrohr 15 bedeckt. Im bestrahlten Zustand dehnt sich das heiße Absorberrohr 13 stärker aus als das kühlere Hüllrohr 15. Aus diesem Grund sind Ausgleichsstücke 17 in Form eines Metallbalges an den Absorberrohrenden eingeschweißt. Die Ausgleichsstücke 17 gewährleisten einen flexiblen Metall-Glasübergang, um so die verschiedenen Längenausdehnungen zu kompensieren.

Erfindungsgemäß ist in dem Verbindungsbereich zwischen zwei benachbarten Hüllrohren 15 ein das Absorberrohr bzw. das Hüllrohr 15 umgebender Spiegelkragen 20 angeordnet, der bei diesem Ausführungsbeispiel eine um 360° umlaufende Kegelstumpfform hat. Der Spiegelkragen 20 ist außen verspiegelt. Er weist ein breites Konusende 20a großen Durchmessers und gegenüberliegend ein schmales Konusende 20b kleineren Durchmessers auf. Der Durchmesser des Konusendes 20b ist gleich dem Außendurchmesser des Hüllrohrs 15. Der Spiegelkragen 20 schließt sich an das Ende des Hüllrohrs 15 an, und er bedeckt den Verbindungsbereich 50 zum benachbarten Hüllrohr 15 auf mindestens einem Teil der Rohrlänge. Bei dem vorliegenden Ausführungsbeispiel ist ein Ausgleichsstück 17 in dem von dem Spiegelkragen umschlossenen Hohlraum enthalten. Ein zweiter (nicht dargestellter) Spiegelkragen kann sich jenseits der Verbindungsstelle 16 befinden und den anderen Faltenbalg 17 bedecken. Die beiden Spiegelkragen sind dann mit ihren großen Enden 20a einander zugewandt. Dazwischen befindet sich die Stütze 14.

Die Spiegelkragen 20 haben die Wirkung, dass die einfallende Sonnenstrahlung SR an der konischen Spiegelfläche reflektiert und auf das angrenzende Absorberrohr 13 geworfen wird. Man erkennt, dass die dem Verbindungsbereich zwischen den Rohren auftreffende Solarstrahlung SR durch den Spiegelkragen 20 auf den exponierten Bereich des Absorberrohres 13 umgelenkt wird und durch das Hüllrohr 15 hindurch zum Absorberrohr gelangt. Auf diese Weise wird die Energieausbeute des Parabolrinnenkollektors 10 verbessert.

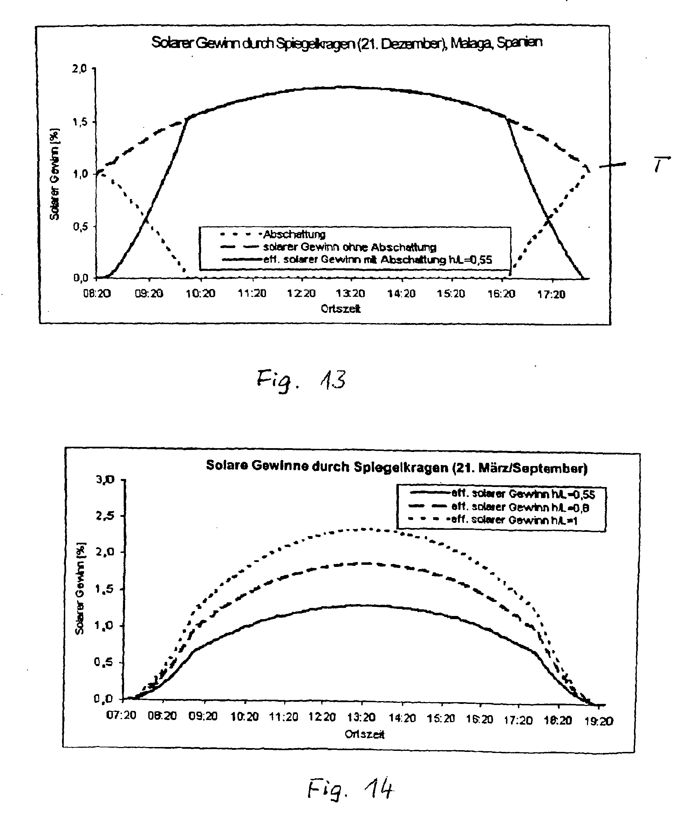

In der Fig. 3 ist schematisch in perspektivischer Darstellung eine Anordnung mit Absorberrohren und Hüllrohren 15 dargestellt, wobei der Verbindungsbereich 50, in dem die Ausgleichselemente angeordnet sind, durch ein isoliertes Strahlungsschutzelement abgedeckt ist. Dieser Verbindungsbereich bzw. das isolierte Strahlungsschutzelement 50 besitzt die Länge L. Am linken Ende des Verbindungsbereiches 50, das dem südlichen Ende des Verbindungsbereichs 50 bei einer Installation auf der Nordhalbkugel entspricht, ist ein Spiegelkragen 20 angeordnet, der eine plane Fläche 30 in Form eines senkrecht zur Rohrachse angestellten Ringes 31 aufweist. Mit h wird die Höhe des Rings 31 bezeichnet.

In der Fig. 4a ist eine Ausführungsform mit einem Parabolreflektor 11 dargestellt, der vier Parabolsegmente 11a - 11d aufweist. Die zu den Parabolsegmenten gehörenden Brennlinien sind in der Fig. 4a nicht dargestellt, liegen jedoch im Bereich des Absorberrohrs bzw. Hüllrohrs 15. Die Solarstrahlung SR fällt unter dem Winkel α ein, der auch in der Figur 4b eingezeichnet ist.

In der Fig. 4b sind zur Veranschaulichung der mathematischen Beziehung V = h x tan(α) die in den Fig. 3 und 4a dargestellte Anordnung schematisch in Seitenansicht zu sehen. α bezeichnet den Einfallswinkel der Solarstrahlung, L die Länge des Verbindungsbereichs und V die Verschattungslänge. Bei der in Fig. 4b gezeigten Anordnung ist V kleiner als die Länge L, so dass bei dem dargestellten Einfallswinkel α das Hüllrohr 15 rechts vom Verbindungsbereich 50 nicht abgeschattet wird.

In der Fig. 5 ist eine weitere Ausführungsform des Spiegelkragens 20 dargestellt, der insgesamt sechs plane Flächen 30 aufweist, die zur Achse des Hüllrohrs 15 geneigt angeordnet sind. Die planen Flächen 30 bilden Facettenflächen auf einer Konusfläche.

In der Fig. 6 ist diese Anordnung noch einmal in Seitenansicht dargestellt, wobei zusätzlich die einfallende Solarstrahlung SR eingezeichnet ist.

In der Fig. 7 ist diese Anordnung zur Verdeutlichung der mathematischen Beziehungen noch einmal in Seitenansicht dargestellt. Die Verschattungslänge V ergibt sich aus V = c + d = h (sinβ + cosβ **•** tanα), wobei β die Neigung des Spiegelkragens 20 bzw. die Neigung der planen Flächen 30 des Spiegelkragens 20 bezeichnet.

Durch Anbringen eines solchen mit planen Flächen versehenen Spiegelkragens im Verbindungsbereich 50 zwischen zwei benachbarten Rohren wird der optische Wirkungsgrad gesteigert, indem Strahlung, die sonst auf den Verbindungsbereich auftrifft und zum Parabolspiegel zurückreflektiert würde, zusätzlich auch auf das Hüllrohr bzw. das Absorberrohr gelenkt wird.

Der Spiegelkragen 20 wird bei einer Installation auf der Nordhalbkugel auf der Südseite des Übergangsbereiches angebracht. Der Spiegelkragen kann unter dem Winkel β von 90° als Ringscheibe 31 bis zu einem Winkel *β* von 45° als Spiegelkragen 20 mit planen Flächen 30 angeordnet werden.

Bei einem Winkel *β* von 90° sind die Gewinne im Winter am höchsten, für kleinere Winkel erhöhen sich die Gewinne im Sommer, während sich die Gewinne im Winter verkleinern. Die Höhe der Gewinne und Verluste ist von der geographischen Lage, der Orientierung des Solarkollektors und vom Abstand der Höhe der benachbarten Solarkollektoren abhängig, was als Horizontverschattung bezeichnet wird.

Das folgende Fallbeispiel wurde für den Standort Malaga, Nordsüdausrichtung des Solarkollektors und einer Horizontverschattung von 15° berechnet.

In der Fig. 8 ist die Abschattung (Horizontverschattung) in Abhängigkeit von der Ortszeit für den 21. März/September dargestellt. Der Wert T auf der rechten y-Achse bezeichnet die totale Verschattung durch den oder die benachbarten Solarkollektoren.

Ohne Berücksichtigung der Horizontverschattung erhält man die Kurve, die als "solarer Gewinn ohne Abschattung" bezeichnet wird. Berücksichtigt man die Abschattung (Horizontverschattung) so erhält man die durchgezogene Kurve, die den effektiven solaren Gewinn darstellt. Hierbei wurde ein Verhältnis von h durch L von 0,5 gewählt. Der solare Gewinn ist auf die absorbierte Energie einer Anordnung ohne Spiegelkragen bezogen.

Die Fig. 9 und 10 zeigen die entsprechenden Kurven für den 21. Juni und für den 21. Dezember.

Die Fig. 11 bis 13 zeigen entsprechende Diagramme für das Verhältnis h/L von 0,55.

Das Verhältnis h/L = 0,55 hat zur Folge, dass die Verschattungslänge V ganzjährig kleiner ist als die Länge L des Verbindungsbereiches, wie dies in der Fig. 4b dargestellt ist. Dadurch entstehen nur solare Gewinne und Verluste auf der Südseite des Verbindungsbereiches. Es entstehen keine Verluste durch Verschattung des Absorberrohres auf der Nordseite. Verluste entstehen im Sommer in den Morgen- und Abendstunden. In dieser Zeit ist der Solarkollektor durch die Horizontverschattung teilverschattet, wodurch sich die leistungsbezogenen Verluste vermindern.

Am 21. Juni sind Gewinne und Verluste etwa gleich groß. Für alle anderen Tage vergrößern sich die Gewinne und verringern sich die Verluste. Im Winterhalbjahr gibt es nur Gewinne auf der Südseite. Ist das Verhältnis h durch L größer 0,55, so erhöhen sich die Gewinne im Sommerhalbjahr. Gleichzeitig entstehen im Winterhalbjahr Verluste durch Verschattung des Absorberrohrs auf der Nordseite.

Der Spiegelkragen kann auch in einem Winkel β < 90° zur Achse des Hüllrohrs montiert werden. Hierdurch erhöhen sich die Gewinne im Sommerhalbjahr und die Verluste in den Morgen- und Abendstunden werden verringert. Durch die einzelnen planen Flächen 30 wird eine optische Aufweitung der Fokuslinie verhindert.

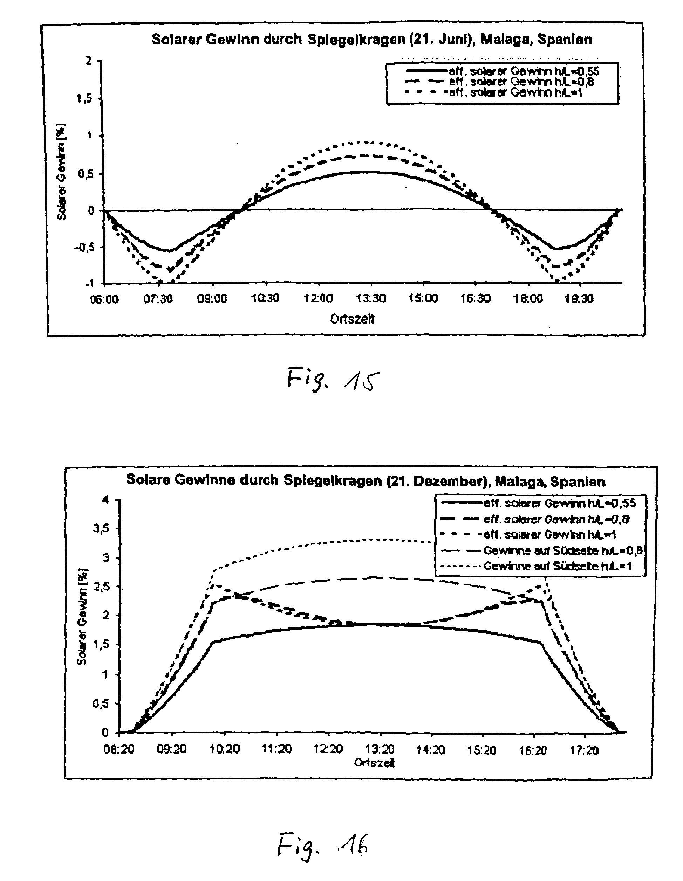

In den Fig. 14 bis 16 sind die effektiven solaren Gewinnkurven für unterschiedliche Verhältnisse h/L für drei Werte, nämlich h/L = 0,55, h/L = 0,8 und h/L = 1 dargestellt. In der Fig. 16 sind zusätzlich noch die Gewinne auf der Südseite für 0,8 und für h/L = 1 dargestellt.

### Bezugszeichenliste

- 10: Parabolrinnenkollektor
- 11: Parabolreflektor
- 11 a-d: Parabolsegmente
- 12: Tragstruktur
- 13: Absorberrohr
- 14: Stütze
- 15: Hüllrohr
- 16: Verbindungsstelle
- 17: Ausgleichsstücke
- 20: Spiegelkragen
- 30: Fläche
- 31: Ringfläche
- 50: Verbindungsbereich

- S: Sonne
- SR: Sonnenstrahlung

## Patentansprüche

1. Solarkollektor mit einem Absorberrohr (13), mit einem Solarstrahlung auf das Absorberrohr fokussierenden Konzentrator und mit mindestens zwei das Absorberrohr(13) umgebenden strahlungsdurchlässigen Hüllrohren (15), wobei in Verbindungsbereichen (50) zwischen den Hüllrohren Ausgleichsstücke (17) für den Längenausgleich vorgesehen sind, **dadurch gekennzeichnet, dass** in den Verbindungsbereichen (50) mindestens ein das Hüllrohr (15) umgebender Spiegelkragen (20) angeordnet ist, der mindestens eine plane Fläche (30) aufweist.

2. Solarkollektor nach Anspruch 1, **dadurch gekennzeichnet, dass** die plane Fläche (30) senkrecht zur Achse des Hüllrohrs (15) ausgerichtet ist.

3. Solarkollektor nach Anspruch 1 oder 2, **dadurch gekennzeichnet, dass** die plane Fläche (30) eine Ringfläche (31) ist.

4. Solarkollektor nach Anspruch 1, **dadurch gekennzeichnet, dass** der Spiegelkragen (20) mehrere plane Flächen (30) aufweist, die auf einem Konus angeordnet sind.

5. Solarkollektor nach Anspruch 4, **dadurch gekennzeichnet, dass** der Spiegelkragen vier bis acht plane Flächen (30) aufweist.

6. Solarkollektor nach Anspruch 5 mit einem Parabolreflektor (11) aus mindestens zwei Parabolsegmenten (11a-d), **dadurch gekennzeichnet, dass** jeweils mindestens eine plane Fläche (30) jeweils einem Parabolsegment (11a-d) zugeordnet ist.

7. Solarkollektor nach einem der Ansprüche 1-6, **dadurch gekennzeichnet, dass** das Verhältnis h/L zwischen 0,3 bis 1 liegt, wobei h die Höhe des Spiegelkragens (20) senkrecht zur Achse des Hüllrohrs (15) und L die Länge des Verbindungsbereichs (50) bezeichnet.

8. Solarkollektor nach einem der Ansprüche 1-7, **dadurch gekennzeichnet, dass** der Spiegelkragen (20) aus Aluminium besteht.

## Claims

1. Solar collector with an absorber tube (13), having a concentrator which focuses solar radiation onto the absorber tube, and having at least two radiation-transmissive cladding tubes (15) surrounding the absorber tube (13), compensating pieces (17) for length compensation being provided in connecting regions (50) between the cladding tubes, **characterized in that** at least one mirror collar (20), which surrounds the cladding tube (15) and has at least one planar surface (30), is arranged in the connecting regions (50).

2. Solar collector according to Claim 1, **characterized in that** the planar surface (30) is aligned perpendicular to the axis of the cladding tube (15).

3. Solar collector according to Claim 1 or 2, **characterized in that** the planar surface (30) is an annular surface (31).

4. Solar collector according to Claim 1, **characterized in that** the mirror collar (20) has a plurality of planar surfaces (30) which are arranged on a cone.

5. Solar collector according to Claim 4, **characterized in that** the mirror collar has four to eight planar surfaces (30).

6. Solar collector according to Claim 5, having a parabolic reflector (11) comprising at least two parabolic segments (11a-d), **characterized in that** in each case at least one planar surface (30) is assigned to in each case one parabolic segment (11a-d).

7. Solar collector according to one of Claims 1-6, **characterized in that** the ratio h/L is between 0.3 to 1, h denoting the height of the mirror collar (20) perpendicular to the axis of the cladding tube (15) and L denoting the length of the connecting region (50).

8. Solar collector according to one of Claims 1-7, **characterized in that** the mirror collar (20) is composed of aluminium.

## Revendications

1. Collecteur solaire comprenant un tube absorbant (13), comprenant un concentrateur qui concentre le rayonnement solaire sur le tube absorbant, au moins deux tubes d'enveloppe (15) qui entourent le tube absorbant (13) de manière à laisser passer le rayonnement, des éléments de compensation (17) pour la compensation en longueur étant prévus dans les zones de liaison (50) entre les tubes d'enveloppe, **caractérisé en ce que** dans les zones de liaison (50) est disposé au moins un collet à miroir (20) entourant le tube d'enveloppe (15) et qui présente au moins une surface plane (30).

2. Collecteur solaire selon la revendication 1, **caractérisé en ce que** la surface plane (30) est dirigée perpendiculairement à l'axe du tube d'enveloppe (15).

3. Collecteur solaire selon la revendication 1 ou 2, **caractérisé en ce que** la surface plane (30) est une surface annulaire (31).

4. Collecteur solaire selon la revendication 1, **caractérisé en ce que** le collet à miroir (20) présente plusieurs surfaces planes (30) qui sont disposées sur un cône.

5. Collecteur solaire selon la revendication 4, **caractérisé en ce que** le collet à miroir présente quatre à huit surfaces planes (30).

6. Collecteur solaire selon la revendication 5, comprenant un réflecteur parabolique (11) composé d'au moins deux segments de parabole (11a - d), **caractérisé en ce qu'**au moins une surface plane (30) est à chaque fois associée à un segment de parabole (11a-d) respectif.

7. Collecteur solaire selon l'une des revendications 1 à 6, **caractérisé en ce que** le rapport h/L est compris entre 0,3 et 1, h désignant la hauteur du collet à miroir (20) perpendiculairement à l'axe du tube d'enveloppe (15) et L la longueur de la zone de liaison (50).

8. Collecteur solaire selon l'une des revendications 1 à 7, **caractérisé en ce que** le collet à miroir (20) est en aluminium.
